# EUROPÄISCHE PATENTANMELDUNG

(11) **EP 4 312 352 A1**
(43) Veröffentlichungstag der Anmeldung: **31.01.2024**
(21) Anmeldenummer: 22187785.5
(22) Anmeldetag: 29.07.2022
(51) Int. Cl.: H02K 9/10, F28D 9/00, F28F 27/02, F28D 21/00

(54) **INTELLIGENTE MODULE EINES PLATTENAUFSATZKÜHLERS EINER DYNAMOELEKTRISCHEN MASCHINE**

(71) Anmelder: Siemens Aktiengesellschaft, 80333 München (DE)
(72) Erfinder: Hösle, Markus, 91058 Erlangen (DE)
(74) Vertreter: Siemens Patent Attorneys

(57) **Zusammenfassung**

Die Erfindung betrifft ein Modul (1) eines Aufsatzkühlers (4), insbesondere Plattenwärmetauschers einer dynamoelektrischen Maschine (5), welches Modul (1) voneinander strömungsmäßig getrennte Bereiche aufweist, die die Ausbildung eines Primärkreislaufes (2) und eines Sekundärkreislauf (3) gestatten, welches Modul (1) zumindest einen Abschnitt (40) aufweist, der einen Zusatzlüfter (23) und/oder eine Sensoren (39) und/oder Analysemöglichkeiten und/oder Kontaktierungsmöglichkeiten und/oder Kommunikationsmittel zu einer übergeordneten Regelung (42) aufweist, welches Modul (1) mit einer Aufnahmeöffnung (22) des Aufsatzkühlers (4) korrespondierende Verschlussmechanismen (44,45) aufweist, welches Modul (1) im eingesetzten Zustand in eine Aufnahmeöffnung (22) des Aufsatzkühlers (4) der dynamoelektrischen Maschine (5) zumindest einen Teil eines Primärkreislaufes (2) und zumindest einen Teil eines Sekundärkreislauf (3) des Aufsatzkühlers mit der dynamoelektrischen Maschine (5) ermöglicht.

## Beschreibung

Die Erfindung betrifft intelligente Module eines Aufsatzkühlers einer geschlossenen dynamoelektrischen Maschine, einen derartigen Aufsatzkühler, eine derartige dynamoelektrische Maschine, als auch die Verwendung einer derartigen dynamoelektrischen Maschine.

Dynamoelektrische Maschine verursachen im Betrieb Verluste, wie u.a. Eisen- und Kupferverluste, die zu einer Wärmeentwicklung in der Maschine führen. Diese Wärme muss aus der Maschine abgeführt werden müssen, um einen ordnungsgemäßen Betrieb der dynamoelektrischen Maschine gewährleisten zu können.

Dabei sind grundsätzlich verschiedene Kühlmedien im Einsatz wie Gas, insbesondere Luft, oder Flüssigkeiten, insbesondere Wasser.

Bei geschlossenen - vor allem größeren - dynamoelektrischen Maschinen liegt ein innerer geschlossener Kühlkreislauf vor (Primärkreislauf), bei dem insbesondere Luft oder ein anderes Medium im Inneren der dynamoelektrischen Maschine umgewälzt wird. Eine Rückkühlung dieses Mediums dieses Primärkreislaufes findet dabei in einem Wärmetauscher statt (Sekundärkreislauf), der beispielsweise auf der dynamoelektrischen Maschine angeordnet ist.

Im Wesentlichen gibt es dabei u.a. zwei bekannte Luftkühlerprinzipien für diese geschlossenen dynamoelektrischen Maschinen. Zum einen die Rohrbündel-Luft-Luft-Wärmetauscher.

Nachteilig dabei ist das vergleichsweise dazu erforderliche große Bauvolumen, um eine dementsprechende Kühlleistung bereitzustellen und die kostenintensive Herstellung. Eine erforderliche Reinigung der jeweiligen Rohre des Rohrbündel-Luft-Luft-Wärmetauscher zur Aufrechterhaltung der Kühlleistung ist außerdem äußerst aufwändig. Außerdem ist eine symmetrische, insbesondere axial gleichmäßige Kühlung der dynamoelektrischen Maschine nahezu unmöglich.

Um die oben genannten Nachteile zu vermeiden, sind Platten-Luft-Luft-Wärmetauscher für dynamoelektrische Maschinen im Einsatz, wie sie beispielsweise aus der WO 01/05017 A1 und der WO 2016/046407 A1 bekannt sind.

Nachteilig sind dabei u.a. der vergleichsweise aufwändige Aufbau und eine umständliche Luftführung.

Ausgehend davon liegt der Erfindung die Aufgabe zugrunde ein optimiertes Kühlsystem einer dynamoelektrischen Maschine bereitzustellen, das u.a. flexibel an die Bedürfnisse der dynamoelektrischen Maschine anpassbar ist und einfach aufgebaut ist.

Die Lösung der gestellten Aufgabe gelingt durch Modul eines Aufsatzkühlers, insbesondere Plattenwärmetauschers einer dynamoelektrischen Maschine, welches Modul voneinander strömungsmäßig getrennte Bereiche aufweist, die die Ausbildung eines Primärkreislaufes und eines Sekundärkreislauf gestatten, welches Modul zumindest einen Abschnitt aufweist, der einen Zusatzlüfter und/oder eine Sensoren und/oder Analysemöglichkeiten und/oder Kontaktierungsmöglichkeiten und/oder Kommunikationsmittel zu einer übergeordneten Regelung aufweist, welches Modul mit einer Aufnahmeöffnung des Aufsatzkühlers korrespondierende Verschlussmechanismen aufweist, welches Modul im eingesetzten Zustand in eine Aufnahmeöffnung des Aufsatzkühlers der dynamoelektrischen Maschine zumindest einen Teil eines Primärkreislaufes und zumindest einen Teil eines Sekundärkreislauf des Aufsatzkühlers mit der dynamoelektrischen Maschine ermöglicht.

Die Lösung der gestellten Aufgabe gelingt auch durch einen erfindungsgemäßen Aufsatzkühler einer dynamoelektrischen Maschine, die einen Stator mit einem Wicklungssystem und einen um eine Achse drehbar gelagerten Rotor aufweist, welcher Aufsatzkühler mit erfindungsgemäßen Modulen zu einem Wärmetauscher, insbesondere Plattenwärmetauscher ausbildbar ist,
- wobei der Aufsatzkühler Mittel aufweist, um mit einer dynamoelektrischen Maschine einen Primärkreislauf und einen davon strömungstechnisch getrennten Sekundärkreislauf auszubilden,
- wobei der Aufsatzkühler Primäröffnungen zu der dynamoelektrischen Maschine aufweist, die zur Ausbildung eines Primärkreislaufes dienen, und Sekundäröffnungen, die zur Ausbildung eines Sekundärkreislaufes dienen,
- wobei der Aufsatzkühler Aufnahmeöffnungen zur Aufnahme der Module aufweist,
- wobei der Aufsatzkühler einen Rahmen/Gehäuse bildet, der für die Module eine elektrische Kontaktiereinrichtung und/oder Datenverbindung der Module untereinander und/oder Verbindungen zu einer übergeordneten Regelung in der Aufnahmeöffnung bereitstellt,
- wobei durch Einsetzen oder Ausnehmen der Module in ihre bzw. aus Ihren jeweiligen Aufnahmeöffnungen Verschlussmechanismen zur Öffnung/Verschließen von Primärkreislauf und Sekundärkreislauf betätigt werden.

Die Lösung der gestellten Aufgabe gelingt auch durch eine dynamoelektrische Maschine mit einem erfindungsgemäßen Aufsatzkühler, wobei ein Gehäuse der dynamoelektrischen Maschine Öffnungen aufweist, die mit dementsprechenden Primäröffnungen eines Aufsatzkühlers derart korrespondieren, dass sich im Betrieb der dynamoelektrischen Maschine ein Primärkreislauf einstellt, der mittels eines Kühlluftstromes eines Sekundärkreislaufes über Module des Aufsatzkühlers rückkühlbar ist.

Die Lösung der gestellten Aufgabe gelingt auch durch Industrielle Arbeitsmaschinen, wie Verdichtern, Lüfter, Pumpen oder Kompressoren mit einer erfindungsgemäßen dynamoelektrischen Maschine, wobei die Kühlleistung je nach Verwendung und Aufstellungsort über Volumenströme und Anzahl und/oder Art der Module anpassbar ist.

Die Module weisen neben ihrem plattenförmigen Aufbau einen Abschnitt auf, der für einen Zusatzlüfter und/oder Sensoren für die Temperaturerfassung der jeweiligen Kühlluftströme, und/oder Analysemöglichkeiten u.a. für Rückstände in der Kühlluft (Produkte von Teilentladungen in der Isolation) und/oder Erfassen von Geräuschemissionen und deren Behebung veranlasst, (z.B. Einleiten einer aktiven Schwingungsdämpfung), und/oder Erfassen von außerplanmäßige Luftdruckdifferenzen, insbesondere im Bereich des Primärkreislaufes, die ggf. auf außergewöhnliche Verschmutzung oder Verstopfung der Kreisläufe hinweist.

Damit können u.a. die Kühlkreisläufe von Primärkreislauf und Sekundärkreislauf des gesamten Aufsatzkühlers und/oder der einzelnen Module über eine KI (künstliche Intelligenz) überwacht und über eine zentrale Regelung und/oder eine Regelung direkt am Modul gesteuert werden. Z.B. kann damit über den Volumenstrom von Primärkreislauf und/oder Sekundärkreislauf die Kühlleistung direkt der Belastung der dynamoelektrischen Maschine und/oder der Umgebungstemperatur angepasst werden.

Außerdem kann die chemische Beständigkeit der einzelnen Module des Aufsatzkühlers durch die Verwendung beschichteter Platten in jedem der Module dem Einsatzort/Verwendungszweck/- Umgebung des Plattenwärmetauscher bzw. der dynamoelektrischen Maschine angepasst werden. Dies ist vor allem für den Einsatz der Module und damit der dynamoelektrischen Maschine in der Umgebung aggressiver Gase von Vorteil, insbesondere an einem explosionsgeschützten Aufstellungsort der dynamoelektrischen Maschine.

Durch den modularen Aufbau des als Plattenwärmetauschers ausgeführten Aufsatzkühlers, ist ein einfacher Austausch der einzelnen Module zur Überholung, Reinigung etc. möglich. Der Betrieb der dynamoelektrischen Maschine muss bei Wartung einzelner Module nicht unterbrochen werden, da die Kühlung über die verbleibenden Module erfolgt bzw. sogar durch deren erhöhten Kühlmittel-Durchsatz kompensiert werden kann.

Erfindungsgemäß wird nunmehr ein Aufsatzkühler bereitgestellt, der einen Primärkreislauf und einen Sekundärkreislauf mit einer dynamoelektrischen Maschine ausbildet, wobei der Aufsatzkühler lediglich ein Gerüst/Basisstruktur mit Aufnahmeöffnungen für Lüfter, Luftschächte und Aufnahmeöffnungen der Module aufweist, wobei die Module je nach Bedarf "intelligent" ausgelegt sind. Wie weiter unter dargelegt ist, sind dies u.a. Sensoren, eigene Lüfter an den Modulen, speziell gestaltete und chemisch beständige Platten, eine eigene Regelelektronik, Analysemöglichkeiten der Luftströme, etc.

Mit anderen Worten - das Gerüst bzw. Rahmen oder Gehäuse des Aufsatzkühlers dient nur als mechanische Basisstruktur, die die Verkabelungen der elektrischen Energieversorgung und/oder Datenleitungen von und zu den Modulen und/oder einem Lüfter bzw. Pumpe eines Sekundärkreislaufs übernimmt.

Als Primäröffnungen im Gehäuse des Aufsatzkühlers sind dabei Öffnungen zu verstehen, die zusammen mit dementsprechenden Öffnungen im Gehäuse der dynamoelektrischen Maschine, wie Zu- und Abstromkanälen, einen Primärkreislauf ausbilden.

Sekundäröffnungen im Gehäuse des Aufsatzkühlers sind demnach Öffnungen, die einen Sekundärkreislauf ausbilden.

Es erfolgt eine Verriegelung der Aufnahmeöffnungen des Aufsatzkühlers bei Entnahme der Module, d.h. mechanische Verschlussmechanismen vermeiden ein strömungsmäßiger Kurzschluss zwischen Primärkreislauf und Sekundärkreislauf als auch unter den Kreisläufen selbst. Bei Einschieben der Module in die Aufnahmeöffnungen können sich die Kreisläufe wieder ordnungsgemäß ausbilden.

Diese, Verriegelungsmechanismen weisen zwischen den jeweiligen Modulen und deren Aufnahmeöffnungen mechanisch korrespondierende Teile auf. Diese weisen u.a. eine mechanische Verriegelung gegen unbefugtes Entfernen eines Moduls auf. Des Weiteren wird ein Öffnen bzw. Schließen der Strömungskanäle von Primärkreislauf und Sekundärkreislauf gewährleistet. Ebenso wird durch diese mechanisch korrespondierenden Teile eine elektrische Kontaktierung zwischen dem jeweiligen Modul und der im Aufsatzkühler bereitgestellten elektrischen Versorgung gewährleistet.

Als Primärkreislauf wird unabhängig von ein- oder zweiseitiger Belüftung innerhalb der dynamoelektrischen Maschine der Luftstrom bzw. Luftstromverteilung bezeichnet, der Komponenten der Maschine, wie Wickelkopfraum, Wickelkopf, Blechpaket, Wicklungen, Gehäuse, Lager an- bzw. umströmt und als geschlossener Kreislauf ausgeführt ist, der keinen strömungsmäßigen Kontakt nach außen hat. Der Luftstrom des Primärkreislaufes wird durch einen oder mehrere Eigenlüfter und/oder Fremdlüfter der dynamoelektrischen Maschine und/oder durch zuschaltbare Zusatzlüfter der jeweiligen Module drückend oder saugend generiert.

Als Sekundärkreislauf wird der Luftstrom im Aufsatzkühler bezeichnet, der wärmetechnisch mit dem Luftstrom des Primärkreislaufes gekoppelt ist, ihn also rückkühlen kann, wobei der Luftstrom bzw. Luftstromverteilung des Sekundärkreislaufes durch Eigen- und/oder Fremdlüfter und/oder durch zuschaltbare Zusatzlüfter der jeweiligen Module drückend oder saugend generiert wird.

Vorzugsweise ist der Sekundärkreislauf offen ausgeführt, d.h. er wird mit Umgebungsluft betrieben, die aus der Umgebung angesaugt wird und erwärmt an die Umgebung wieder abgegeben wird. Damit kann eine dynamoelektrische Maschine mit einem derartigen Aufsatzkühler ausgestattet an nahezu beliebigen Orten aufgestellt werden. Es sind ggf. vor den Sekundärkreislauf Filtermatten oder Luftfilter für stark verschmutzte Luft vorzusehen.

Dabei kann sich jeder Luftstrom sowohl des Primärkreislaufes als auch des Sekundärkreislaufes zumindest abschnittsweise innerhalb seines Strömungsverlaufs in parallele Strömungspfade aufteilen, insbesondere während des Wärmeaustausches zwischen Primärkreislauf und Sekundärkreislauf. Dies geschieht vorteilhafterweise durch Leitvorrichtungen in der dynamoelektrischen Maschine und/oder im Aufsatzkühler, um die Kühlwirkung der Strömung von Primärkreislauf und/oder Sekundärkreislauf zu optimieren.

Außerdem kann der Sekundärkreislauf auch als Flüssigkeitskühlkreislauf - beispielsweise mit Wasser - ausgeführt sein. Die Module sind dann Wärmetauscher, die Luft des Primärkreislaufes an die Flüssigkeit des Sekundärkreislaufes abgeben. Für eine effiziente Kühlung regelt dann die Regelung den jeweiligen Kühlmittelstrom von Primärkreislauf und/oder Sekundärkreislauf.

Es gibt also eine übergeordnete Regelung des Aufsatzkühlers, die nicht zwangsläufig am Basisgerüst des Aufsatzkühlers angeordnet sein muss (z.B. kann diese Regelung in einer entfernten Warte angeordnet sein). Erfindungsgemäß ist auch zusätzlich je nach Ausführung der Module eine eigene, der übergeordneten Regelung des Aufsatzkühlers untergeordnete, Regelung am Modul selbst vorgesehen. Die Regelungen am Modul unterstützen somit nicht nur die Kühlung des Primär- und/oder Sekundärkreislaufes, sondern Überwachungen diese Luftströme auch auf Inhaltsstoffen, die z.B. mit dem Primärkreislauf durch die Module gefördert werden und die Rückschlüsse auf den Zustand der Maschine zulassen bzw. auf Wartungsbedarf der Maschine hinweisen. Dies kann u.a. die Isolation des Wicklungssystems (Teilentladungen) oder den Lagerzustand (Abrieb der Wälzkörper) etc. betreffen.

Diese unterschiedlichen möglichen Ausgestaltungen der Module führen zu einer Anpassung an den Anwendungszweck der dynamoelektrischen Maschine und/oder erforderliche Kühlleistung des Aufsatzkühlers. Dabei weisen die Module eine Intelligenz und Zusatzlüfter auf, die eine optimierte Kühlung (Strömungsverhalten, Geräuschemissionen,) und eine Detektierung von Schadstoffen in den Kühlströmen und daraus weitere abgeleitete Aktionen erlaubt, die letztlich in den Regelungen in Algorithmen (KI, digitaler Zwilling) abgelegt wurde und dementsprechende Veranlassungen für den weiteren Betrieb der dynamoelektrischen Maschine treffen können.

Der Aufsatzkühler bildet eine Basisstruktur, die u.a. die Verkabelung, Kontaktierung der Module und ggf. eine den jeweiligen Kühlkreisläufen überlagerte Regelung aufweist, die die Kühlung dieser dynamoelektrischen Maschine oder auch ggf. anderer, dem gleichen Prozess zugeordnete Antriebe regelt. Dies kann ein Walzwerk, eine Papierfabrik oder eine Förderanlage sein.

Die Erfassung und Auswertung von Messwerten, die Regelung der Kühlleistung und/oder die KI wird somit aus der dynamoelektrischen Maschine in die Module des Aufsatzkühlers und/oder eine übergeordnete Regelung verlagert.

Erfindungsgemäß wird nunmehr durch einen Aufsatzkühler mit den erfindungsgemäßen Modulen ein vergleichsweise effizienteres Kühlsystem für dynamoelektrische Maschinen bereitgestellt, das aufgrund seines modularen Aufbaus auch für einen Primärkreislauf von ein- und zweiseitigen Belüftungssystemen dynamoelektrischer Maschinen geeignet ist.

Durch den modularen Aufbau des Plattenwärmetauschers in dem Aufsatzkühler ist außerdem ein einfacher Austausch der einzelnen Module zur Überholung, Reinigung etc. möglich. Der Betrieb der dynamoelektrischen Maschine muss bei Wartung einzelner Module nicht unterbrochen werden, da die Kühlung über die verbleibenden Module erfolgt, die sich dann selbstständig dem jeweiligen Kühlanforderungen anpassen, indem der Zusatzlüfter der verbleibenden Module oder ein übergeordneter Fremdlüfter im Primärkreislauf und/oder Sekundärkreislauf zuschaltet.

Mit einer Einschränkung der Kühlleistung zu lediglich dann zu rechnen, wenn die Kühlleistung von den verbleibenden Modulen im Aufsatzkühler nicht mehr übernommen werden kann.

Bei Entnahme eines Moduls aus dem Aufsatzkühler verschließt sich dessen Aufnahmeöffnung derart, dass sich im Primärkreislauf und/oder Sekundärkreislauf keine strömungstechnischen Kurzschlüsse ergeben, die die Kühlleistung beeinträchtigen könnten. Der Primärkreislauf und der Sekundärkreislauf schließen sich im Betrieb der dynamoelektrischen Maschine über die im Aufsatzkühler verbleibenden Module.

Vorteilhafterweise lassen sich auch kostengünstige standardisierte Module als Plattenwärmetauscher in diese Aufnahmeöffnungen einsetzen. Sie bilden dann aber keinen regelbaren Teil des Kühlsystems.

Durch die Verwendung von Modulen, können in dieselbe Gehäuse des Aufsatzkühlers Module eingesetzt werden, die entweder nach dem Kreuzstrom- oder Gegenstromprinzip arbeiten. Dies führt zu einer Anpassung an den Anwendungszweck und/oder erforderliche Kühlleistung des Aufsatzkühlers.

Die chemische Beständigkeit des Aufsatzkühlers kann durch die Verwendung beschichteter Platten in jedem der Module des Plattenwärmetauscher verbessert werden. Die jeweils erforderliche Beschichtung kann dabei an die Anforderungen der chemischen Beständigkeit bzw. den Verwendungszweck des auf der Maschine angeordneten Aufsatzkühlers angepasst werden.

Die Erfindung sowie weitere vorteilhafte Ausgestaltungen der Erfindung werden anhand prinzipiell dargestellter Ausführungsbeispiele näher erläutert, darin zeigen:
- FIG 1, 2: verschiedene Ausführungen von Modulen,
- FIG 3: perspektivische Darstellung einer dynamoelektrischen Maschine mit Aufsatzkühler,
- FIG 4: Längsschnitt einer dynamoelektrischen Maschine mit Aufsatzkühler,
- FIG 5: Querschnitt einer dynamoelektrischen Maschine mit Aufsatzkühler,
- FIG 6: Längsschnitt einer dynamoelektrischen Maschine mit Aufsatzkühler mit einem prinzipiellen Primärkreislauf und Sekundärkreislauf,
- FIG 7: Draufsicht auf einen Aufsatzkühler mit prinzipiellen Sekundärkreislauf,
- FIG 8: Längsschnitt einer dynamoelektrischen Maschine mit Aufsatzkühler mit einem weiteren prinzipiellen Primärkreislauf und Sekundärkreislauf,
- FIG 9: Draufsicht auf einen Aufsatzkühler mit prinzipiellen Sekundärkreislauf bei entnommenen Modulen,
- FIG 10: prinzipielle Darstellung der Abschottungen.

Es sei angemerkt, dass sich Begriffe wie "axial", "radial", "tangential" etc. auf die in der jeweiligen Figur bzw. im jeweils beschriebenen Beispiel zum Einsatz kommende Achse 7 beziehen. Mit anderen Worten beziehen sich die Richtungen axial, radial, tangential stets auf eine Achse 7 des Rotors 18 und damit auf die entsprechende Symmetrieachse des Stators 17. Dabei beschreibt "axial" eine Richtung parallel zur Achse 7, "radial" beschreibt eine Richtung orthogonal zur Achse 7, auf diese zu oder auch von ihr weg, und "tangential" ist eine Richtung, die in konstantem radialem Abstand zur Achse 7 und bei konstanter Axialposition kreisförmig um die Achse 7 herum gerichtet ist. Der Ausdruck "in Umfangsrichtung" ist mit "tangential" gleichzusetzen.

In Bezug auf eine Fläche, bspw. eine Querschnittsfläche, beschreiben die Begriffe "axial", "radial", "tangential" etc. die Orientierung des Normalenvektors der Fläche, d.h. desjenigen Vektors, der senkrecht auf der betroffenen Fläche steht.

Unter dem Ausdruck "koaxiale Bauteile", bspw. koaxiale Komponenten wie Rotor 18 und Stator 17, werden hier Bauteile verstanden, die gleiche Normalenvektoren aufweisen, für die also die von den koaxialen Bauteilen definierten Ebenen parallel zueinander sind. Des Weiteren soll der Ausdruck beinhalten, dass die Mittelpunkte koaxialer Bauteile auf der gleichen Rotations- bzw. Symmetrieachse liegen. Diese Mittelpunkte können jedoch auf dieser Achse ggf. an verschiedenen axialen Positionen liegen und die genannten Ebenen also einen Abstand >0 voneinander haben. Der Ausdruck verlangt nicht zwangsläufig, dass koaxiale Bauteile den gleichen Radius haben.

Der Begriff "komplementär" meint im Zusammenhang mit zwei Komponenten, welche "komplementär" zueinander sind, dass ihre äußeren Formen derart ausgestaltet sind, dass die eine Komponente vorzugsweise vollständig an der zu ihr komplementären Komponente angeordnet werden kann, so dass sich die innere Oberfläche der einen Komponente und die äußere Oberfläche der anderen Komponente idealerweise lückenlos bzw. vollflächig berühren. Konsequenterweise ist also im Falle von zwei zueinander komplementären Gegenständen die äußere Form des einen Gegenstandes durch die äußere Form des anderen Gegenstandes festgelegt.

Der Übersichtlichkeit wegen werden in den Figuren teilweise in den Fällen, in denen Bauteile mehrfach vorhanden sind, häufig nicht sämtliche dargestellten Bauteile mit Bezugszeichen versehen.

Die beschriebenen Ausführungen können beliebig kombiniert werden. Ebenso sind auch Einzelmerkmale der jeweiligen Ausführungen kombinierbar, ohne das Wesen der Erfindung zu verlassen. So zeigen einige Figuren mehr die Strömungsverhältnisse innerhalb der Module 1 bzw. des Aufsatzkühlers 4 bzw. der dynamoelektrischen Maschine 5, während andere Figuren dabei mehr die dazu erforderliche Mechanik prinzipiell darstellen.

Zur Vermeidung von Wiederholungen wird bei der Beschreibung von bereits grundsätzlich dargestellten Ausführungen und deren Bezugszeichen im weiteren Verlauf der Beschreibung schwerpunktmäßig nur noch auf die ergänzenden oder unterscheidenden Merkmale der jeweiligen Ausführung eingegangen.

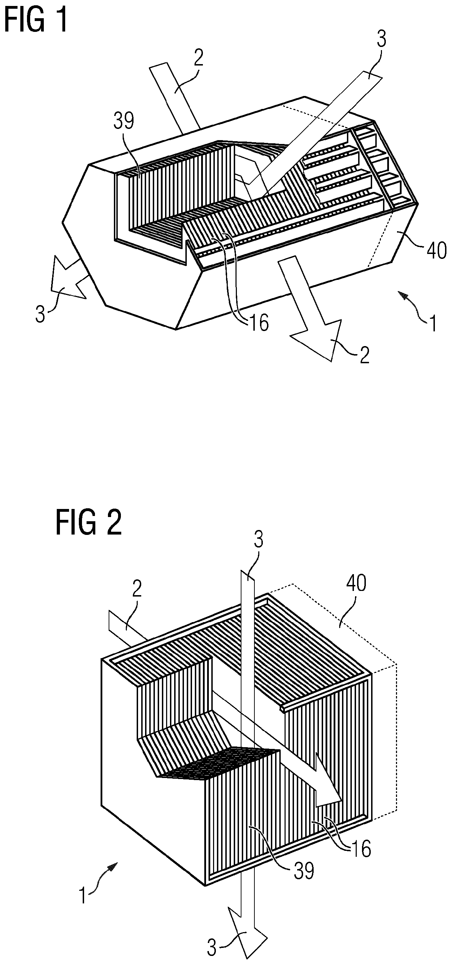

FIG 1 zeigt ein Modul 1 eines Plattenwärmetauschers, der einen sechseckigen Querschnitt aufweist, wobei das Modul 1 hexagonal ausgeführt ist. Platten 16 des Moduls 1 sind so angeordnet, dass die Luftströme eines Primärkreislaufes 2 und eines Sekundärkreislaufes 3 in dem Modul 1 über die Platten die Wärme austauschen können.

FIG 2 zeigt ein Modul 1 eines Plattenwärmetauschers, der einen viereckigen Querschnitt aufweist, wobei das Modul 1 würfelförmig oder quaderförmig ausgeführt ist. Die Platten 16 des Moduls 1 sind so angeordnet, dass die Luftströme des Primärkreislaufes 2 und Sekundärkreislaufes 3 in dem Modul 1 über die Platten die Wärme austauschen können.

Beiden Ausführungen ist gemein, dass die Module 1 so aus Platten 16 zusammengesetzt sind, dass jeweils in aufeinanderfolgenden Zwischenräumen benachbarter Platten 16 einmal der Luftstrom des Primärkreislaufes 2 - also die aufgewärmte Luft, und danach die Luft des Sekundärkreislaufes 3 - also die wärmeabführende Luft strömt.

Das Plattenpaket der jeweiligen Module 1 ist nach außen und zwischen den Luftströmen mittels Dichtelementen abgedichtet. Ebenso ist ein Verkleben oder ein Verlöten des Plattenpaketes zur Abdichtung denkbar. Eine Paketierung der Module 1 wird durch Spannschrauben, oder Schweißverbindungen geschaffen.

Um den Wärmeübergang zwischen Primärkreislauf 2 und Sekundärkreislaufes 3 innerhalb eines Moduls 1 zu intensivieren, sind die Platten 16 vorzugsweise profiliert gestaltet, so dass sich Turbulenzen in der jeweiligen Durchströmung bilden.

Des Weiteren lässt sich durch ein Gleichstrom- oder Gegenstromprinzip des Primärkreislaufes 2 und Sekundärkreislaufes 3 die Kühlleistung der einzelnen Module 1 und eines damit ausgestatteten Aufsatzkühlers 4 beeinflussen.

Die Abschnitte der Luftströme in den Modulen 1 von Primärkreislauf 2 und Sekundärkreislauf 3 sind in FIG 1 und FIG 2 lediglich beispielhaft dargestellt.

Die Luftströme des Primärkreislaufes 2 und Sekundärkreislaufes 3 werden durch dementsprechende und verschiedenste Leitvorrichtungen 12 in einem Aufsatzkühler 4 in ihrem jeweiligen Strömungsverlauf optimiert.

Die Module 1 beinhalten Möglichkeiten für einen Zusatzlüfter 23, Sensoren 39 für die Temperatur der jeweiligen Kühlluftströme, und Analysemöglichkeiten u.a. für Rückstände in der Kühlluft (Produkte von Teilentladungen in der Isolation) und Geräuschemissionen und deren Behebung, Erfassung außerplanmäßiger Luftdruckdifferenzen, die auf eine Verschmutzung, insbesondere im Bereich des Primärkreislaufes 2 hinweisen.

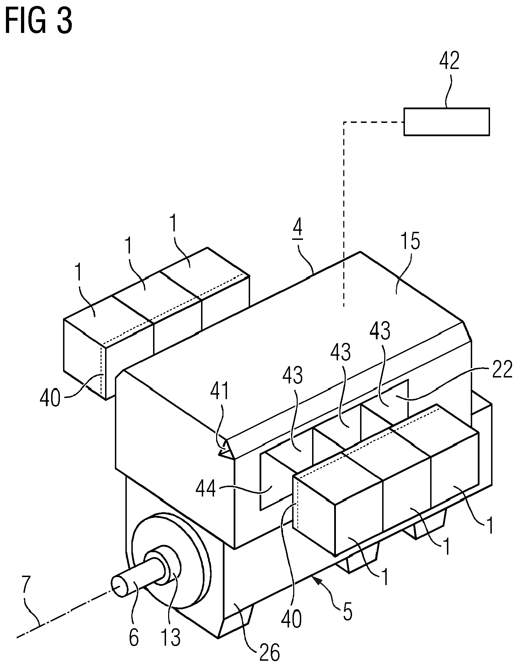

Damit kann der Primärkühlstrom und/oder der Sekundärkühlstrom des gesamten Aufsatzkühlers 4 und/oder der einzelnen Module 1, z.B. der Volumendurchsatz der Kühlmedien und damit die gesamte Kühlleistung über eine KI (Künstliche Intelligenz) mittels einer übergeordneten Regelung 42 (siehe FIG 3) gesteuert und den jeweiligen Umgebungs-Bedingungen angepasst werden.

Außerdem kann die chemische Beständigkeit der einzelnen Module 1 des Aufsatzkühlers 4 durch die Verwendung beschichteter Platten 16 in jedem der Module 1 dem Einsatzort/Verwendungszweck/Umgebung des Plattenwärmetauschers bzw. der dynamoelektrischen Maschine 5 angepasst werden.

Als Materialien für die Platten 16 der Module 1 eignen sich Kunststoffe, Aluminium, Stahl, Kupfer oder Edelstahl. Ebenso ist es denkbar die Platten 16 der Module 1 mit einer Epoxy-Beschichtung, oder weiteren Anstrichen zu versehen.

Ebenso können diese Platten 16 eben oder gewellt ausgeführt sein.

Die prinzipiell angedeutete Anordnung der Platten 16 der Module 1, soll nur die prinzipielle Darstellung von Plattenkühlern der Module 1 zeigen, jedoch nicht zwangsläufig eine dadurch festgelegte Strömungsrichtung von Primärkreislauf 2 und/oder Sekundärkreislauf 3.

Der Abschnitt 40 der Module 1 hat jeweils einen Zusatzlüfter 23 und/oder weitere Sensoren 39 für die Temperatur der jeweiligen Kühlluftströme und/oder Analysemöglichkeiten u.a. für Rückstände in der Kühlluft (Produkte von Teilentladungen in der Isolation) und/oder Analysemöglichkeiten für Geräuschemissionen und/oder Mittel zur Erfassung außerplanmäßiger Luftdruckdifferenzen, die auf eine Verschmutzung, insbesondere im Bereich des Primärkreislaufes 2 hinweisen können.

Damit ist das Modul 1 intelligent ausgeführt und kann vor allem über die übergeordnete Regeleinheit 42 die Kühlleistung und/oder das Betriebsverhalten der dynamoelektrischen Maschine 5 steuern. Bei mangelnder Kühlleistung kann beispielsweise der Volumendurchsatz von Primärkreislauf 2 und/oder Sekundärkreislauf 3 erhöht werden, oder es kann die dynamoelektrische Maschine 5 in einem thermisch weniger anspruchsvollen Betrieb gefahren werden. Bei Feststellung von Rückständen im Primärkreislauf, die auf eine sich verschlechternde Isolation schließen lassen, kann die Maschine 5 stillgesetzt werden und eine Schadensmeldung abgesetzt werden.

FIG 3 zeigt in einer perspektivischen Darstellung den Aufsatzkühler 4 auf dem Gehäuse 26 der dynamoelektrischen Maschine 5. Dabei sind die Module 1, die als hexagonale oder - wie in diesem Fall - würfelförmige Plattenkühler ausgebildet sind, aus darstellerischen Gründen aus ihren, vorzugsweise dazu komplementären Aufnahmeöffnungen 22 entnommen. Jedes der Module 1 kann einzeln entnommen werden, zwecks Reinigung der Platten 16 oder des Austauschs, ohne dass ein strömungstechnischer Bypass durch die nicht belegte Aufnahmeöffnung 22 geschaffen wird, der die Kühlleistung der verbleibenden Module 1 beeinträchtigt. Dies wird durch dementsprechende Trennwände 43, Klappen 45 und Abdeckböden 44 der Aufnahmeöffnungen 22, auf die später eingegangen wird, gewährleistet.

Einschuböffnungen bzw. Aufnahmeöffnungen 22 sind ohne Bestückung mit einem Modul 1 zu den jeweiligen Kreisläufen (Primärkreislaufes 2, Sekundärkreislauf 3) zumindest strömungstechnisch geschlossen und die Aufnahmeöffnungen 22 werden bei Bestückung mit Modulen 1 zu dem Primärkreislauf 2 und Sekundärkreislauf 3 geöffnet und bei Entnahme der Module 1 geschlossen. Dabei werden beispielsweise Abdeckung bzw. Klappen beim Einschub der Module 1 in die jeweiligen Aufnahmeöffnungen 22 gegen eine Federkraft weggeschoben oder weggeklappt. Bei Entnahme des Moduls 1 aus der Aufnahmeöffnung 22 schließen sich dann diese Verschlusselemente, sodass kein strömungstechnischer Bypass entstehen kann.

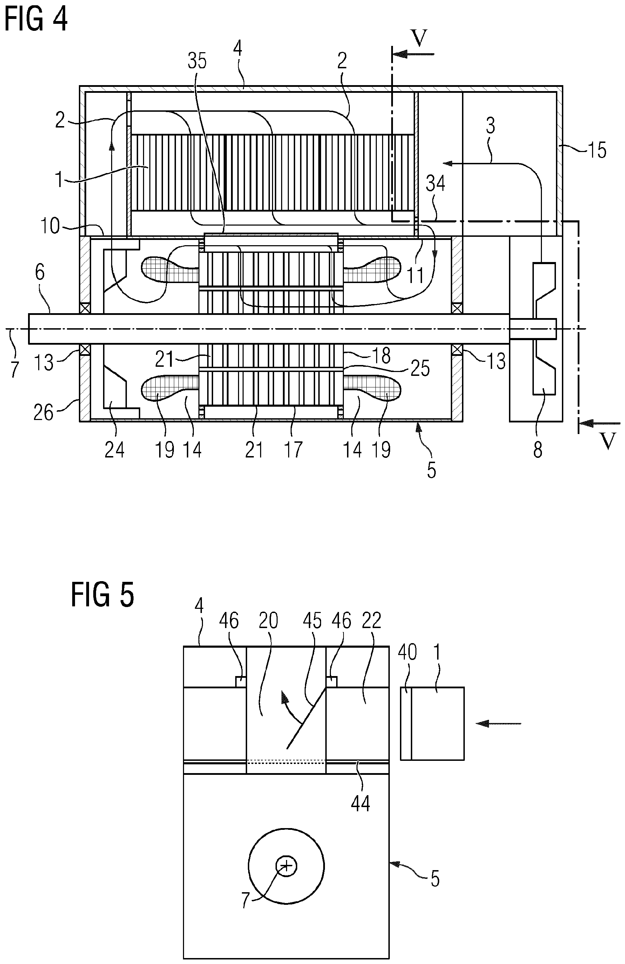

FIG 4 zeigt in einem Längsschnitt eine dynamoelektrische Maschine 5 mit einem Aufsatzkühler 4. Die dynamoelektrische Maschine 5 ist in einem Gehäuse 26 untergebracht, das die Lager 13 aufnimmt. Das Gehäuse 26 der dynamoelektrischen Maschine 5 ist geschlossen ausgeführt und weist lediglich vorgegebene Öffnungen - Zustromkanäle 10 und Abstromkanäle 11 - zu dem Aufsatzkühler 4 auf, die einen Primärkreislauf 2 innerhalb der geschlossenen dynamoelektrische Maschine 5 gestatten.

Im Gehäuse 15 des Aufsatzkühlers 4 sind Öffnungen (Primäröffnungen) vorhanden, die zu den Zustromkanälen 10 und Abstromkanälen 11 in dem Gehäuse 26 der dynamoelektrischen Maschine 5 strömungsmäßig korrespondierend ausgeführt sind, so dass sich ein geschlossener Primärkreislauf 2 einstellt. Außerdem sind auch weitere Leitvorrichtungen 12 im Gehäuse 15 angeordnet, um Primärkreislauf 2 und Sekundärkreislauf 3 auszubilden.

FIG 4 zeigt weiterhin einen Aufsatzkühler 4 der dynamoelektrischen Maschine 5 mit einer prinzipiell dargestellten einseitigen Lüftung des Primärkreislaufes 2 - die auch als Z-Lüftung bezeichnet wird. Dabei tritt die rückgekühlte Luft des Primärkreislaufes 2 an einer Seite (hier rechts) in den Wickelkopfraum 14 - durchströmt auf verschiedenste Arten die Maschine 1 und strömt über den Wickelkopfraum auf der anderen Seite (hier links) aus dem Gehäuse 26. Bei dieser Ausführung wird die erwärmte Luft des Primärkreislaufes 2 im Aufsatzkühler 4 zunächst nach oben geleitet, um von dort dann über die Module 1 auf ihrem "Weg" nach unten rückgekühlt zu werden.

Ein Stator 17 ist in dem Gehäuse 26 drehfest positioniert. Der Stator 17 weist in nicht näher dargestellten Nuten seines Blechpakets ein Wicklungssystem auf, das bestromt, aufgrund elektromagnetischer Wechselwirkungen über einen Luftspalt 25 der dynamoelektrischen Maschine 5 mit dem Rotor 18 eine Rotation des Rotors 18 um seine Achse 7 bewirkt. Der Rotor 18 kann einen Kurzschlusskäfig aufweisen, so dass die dynamoelektrische Maschine 5 als eine Asynchronmaschine ausgebildet ist. Der Rotor 18 kann auch Permanentmagnete aufweisen, so dass die dynamoelektrische Maschine 5 als eine Synchronmaschine (mit Vollpol- oder Schenkelläufer) ausgebildet ist.

Des Weiteren ist es möglich, den Rotor 18 mit einem eigenen Wicklungssystem auszubilden, das beispielsweise über eine Schleifringanordnung elektrisch versorgt wird.

Grundsätzlich eignet sich der Aufsatzkühler 4 für jede erdenkliche Art von dynamoelektrischen Maschinen 5. Es ist lediglich notwendig, dass die Zustromkanäle 10 und Abstromkanäle 11 im Gehäuse 26 der dynamoelektrischen Maschinen 5 mit dementsprechenden vorgesehenen Öffnungen oder Ausnehmungen (Primäröffnungen) im Gehäuse 15 des Aufsatzkühlers 4 strömungstechnisch korrespondierend angeordnet sind.

Das axial geschichtete Blechpaket von Stator 17 und Rotor 18 ist in diesem Fall in vorgebbaren Abständen mit radialen Kanälen 21 versehen, um eine Kühlung u.a. des jeweiligen Blechpakets und des in den Nuten befindlichen Wicklungssystems zu verbessern.

Des Weiteren ist ein Innenlüfter 24 vorgesehen, der die Luft des Primärkreislaufes 2 fördert. In diesem Fall liegt eine sogenannte einseitige Belüftung vor, die auch als Z-Belüftung bezeichnet wird.

Als einseitige Belüftung wird die Belüftung der dynamoelektrischen Maschinen 5 bezeichnet, bei der ein Luftstrom (Primärkreislauf 2) auf einer Seite der dynamoelektrischen Maschinen 5 in einen Wickelkopfraum 14 eingespeist wird und danach über verschiedene parallele und/oder serielle Strömungskanäle - Wickelkopf 19, Rücken des Blechpakets des Stators 17, radiale Kühlkanäle 21, Luftspalt 25, etc. - zu dem anderen Wickelkopfraum 14 gelangt. Von dort gelangt die erwärmte Luft des Primärkreislaufes 2 über einen oder mehrere Lüfter - Eigenlüfter oder Fremdlüfter - in den Aufsatzkühler 4 zur Rückkühlung.

Die Luft des Primärkreislaufes 2 wird somit über einen Wickelkopfraum 14 in das Gehäuse 26 der dynamoelektrischen Maschine 5 geführt und dort über den Wickelkopf 19 und die Blechpakete und/oder den Luftspalt 25 in den anderen Wickelkopfraum 14 geführt. Von dort wird der nun erwärmte Kühlluftstrom über den Aufsatzkühler 4, insbesondere den dort angeordneten Modulen 1 mittels des Sekundärkreislaufes 3 rückgekühlt.

In dieser und den weiteren Ausführungsbeispielen sind teilweise die Primärkreisläufe 2 und oder Sekundärkreisläufe 3 nur teilweise dargestellt, so ist beispielsweise in FIG 3 nur ein der Teil des Primärkreislaufes 2 oberhalb der Achse 7 dargestellt. Der Primärkreislauf 2 oder ein Teil davon verläuft ebenso im unteren Abschnitt, als auch in anderen Bereichen des Innenraumes der dynamoelektrischen Maschine 5 wie z.B. im Luftspalt 25.

Das Gehäuse 15 des Aufsatzkühlers 4 weist u.a. Schalldämmelemente auf, um Schallemissionen im Umfeld der dynamoelektrischen Maschinen 5 zu reduzieren.

Ein Lüfter 8 generiert einen Kühlluftstrom des Sekundärkreislaufes 3, der den erwärmten Kühlluftstrom des Primärkreislaufes 2 über die Plattenwärmetauscher der Module 1 rückkühlt.

In diesem Fall ist der Lüfter 8 ein Eigenlüfter, der mit der Welle 6 drehfest verbunden ist. Es sind jedoch stattdessen oder auch ergänzend auch Fremdlüfter 31 an und/oder auf dem Aufsatzkühler 4 möglich, um den Kühlluftstrom des Sekundärkreislaufes 3 zu unterstützen

Die Module 1 sind, wie auch FIG 5 zu entnehmen, vorzugsweise entlang einem Mittelkanal 20 angeordnet, der sich zumindest abschnittsweise achsparallel erstreckt. In dieser Ausführungsform sind die Module 1 beidseitig entlang des Mittelkanals 20 angeordnet.

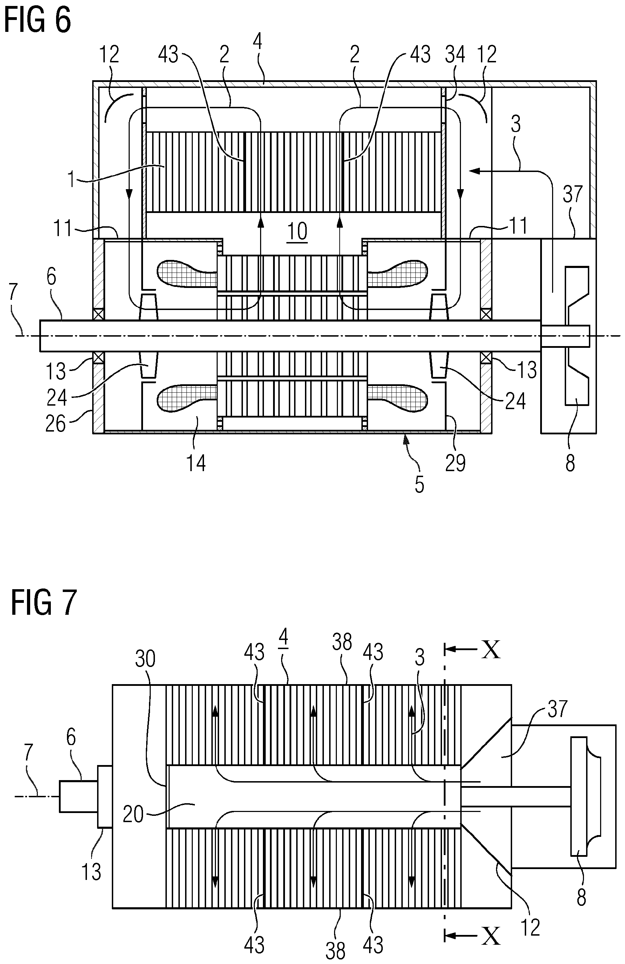

FIG 6 zeigt einen Aufsatzkühler 4 einer dynamoelektrischen Maschine 5 mit einer prinzipiell dargestellten zweiseitigen Lüftung des Primärkreislaufes 2 - auch als X-Lüftung bezeichnet. Dabei ist gegenüber der Ausführung gemäß FIG 4 die Deckplatte 35 entfernt, die u.a. neben einer Anpassung von Leitvorrichtungen 12 im Aufsatzkühler 4 für die einseitige Belüftung notwendig ist.

Als zweiseitige Belüftung wird die Belüftung der dynamoelektrischen Maschinen 5 bezeichnet, bei der ein Luftstrom (Primärkreislauf 2) auf beiden Seiten der dynamoelektrischen Maschinen 5 in den Wickelkopfraum 14 eingespeist wird und danach über verschiedene parallele und/oder serielle Strömungskanäle - Wickelkopf 19, Rücken des Blechpakets des Stators 17, radiale Kühlkanäle 21, Luftspalt 25, etc. - im Wesentlichen mittig am Rücken des Statorblechpakets in den Aufsatzkühler 4 gelangt. Die erwärmte Luft des Primärkreislaufes 2 wird durch einen oder mehrere Lüfter - Eigenlüfter oder Fremdlüfter - in den Aufsatzkühler 4 zur Rückkühlung gefördert. Dementsprechende Blendenelemente 29 verbessern den Strömungsverlauf des Primärkreislaufes 2.

FIG 7 zeigt in einer Draufsicht auf den Aufsatzkühler 4 einen prinzipiellen Verlauf des Luftstromes des Sekundärkreislaufes 3. Dabei wird von einem Eigenlüfter 8 und/oder einem Fremdlüfter 31 ein Luftstrom axial über einen Zuluftkanal 37 in den Mittelkanal 20 gedrückt, der über Plattenwärmetauscher der Module 1 Luft des Primärkreislaufes 2 rückkühlt und erwärmt aus dem Gehäuse 15 des Aufsatzkühlers 4 über die Abluftkanäle 38 austritt.

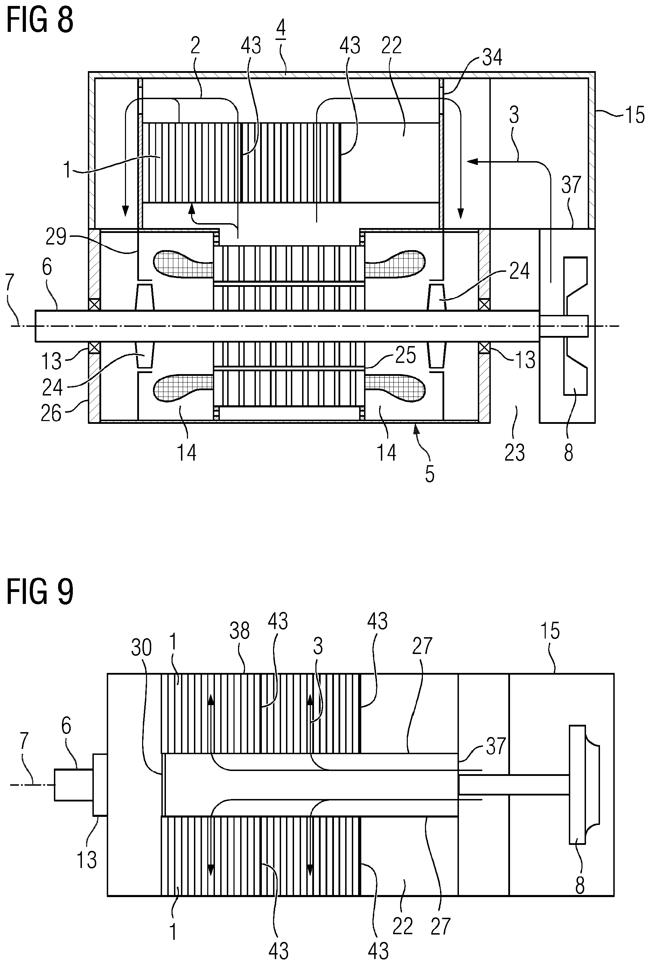

FIG 8 zeigt eine weitere Möglichkeit des Einsatzes des erfindungsgemäßen Aufsatzkühlers 4 bei einer zweiseitigen Belüftung der dynamoelektrischen Maschine 5. Im vorliegenden Beispiel ist eine Aufnahmeöffnung 22 nicht belegt. Dadurch sind strömungstechnisch die Leitvorrichtungen 12 Klappen 45 und Abdeckböden 44 des Aufsatzkühlers 4 so positioniert, dass sich keine strömungsmäßigen Kurzschlüsse einstellen. Primärkreislauf 2 und/oder Sekundärkreislauf 3 in dieser Aufnahmeöffnung 22 bleibt bei "Nichtbelegung" geschlossen.

FIG 9 zeigt die dazu korrespondierende Gestaltung des Sekundärkreislaufes 3, dessen nicht belegten Aufnahmeöffnungen 22 für den Sekundärkreislauf 3 blockiert sind, um einen strömungsmäßigen Kurzschluss zu vermeiden.

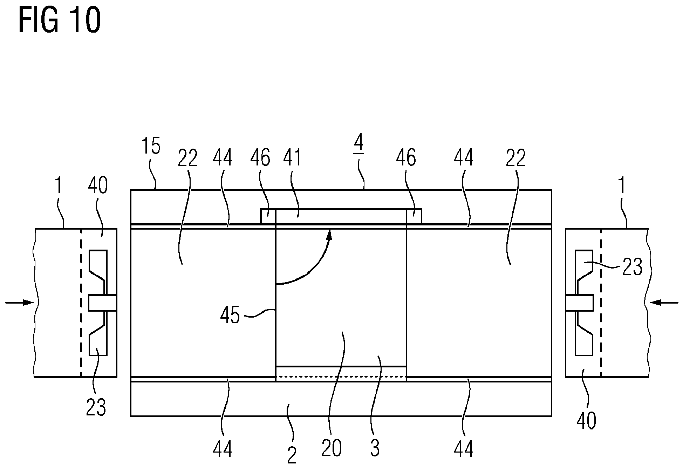

FIG 10 zeigt in einer prinzipiellen Darstellung, wie die Module 1 in den Aufnahmeöffnung 22 geschoben werden, dabei wird mit dem Einschieben eine Klappe 45 nach oben geklappt, um den Sekundärkreislauf zu öffnen. Gleichzeitig wird durch das Modul 1 auf der Oberseite und Unterseite der Aufnahmeöffnung 22 die Abdeckböden 44 Richtung Mittelkanal 20 verschoben und so der Primärkreislauf geöffnet. Mit dem Abschluss des Eischiebens der Module 1 erfolgt auch die elektrische Kontaktierung, z.B. zu Versorgung des Zusatzlüfters 23 und/oder der Regelung und Analyseeinheit.

Diese mechanische Verschlussmechanismen können auch anders ausgeführt sein, entscheiden ist jedoch immer, dass Sekundär- und Primärkreislauf erst "freigegeben" werden, wenn die Module 1 eingesetzt werden.

Möglich ist ebenso, dass die eine Seite eines asymmetrisch verlaufenden Mittelkanal 20 des Aufsatzkühlers 4 vorzugsweise die intelligenten Module 1 aufweist, während die andere Seite standardisierten Module mit geringerer Einbau-Tiefe aufweist.

Ebenso ist vorstellbar, dass ein Fremdlüfter 31, insbesondere ein Axiallüfter über eine nicht näher dargestellte Haube strömungstechnisch mit dem Sekundärkreislauf 3 verbunden ist. Er ist beispielsweise auf dem Aufsatzkühler 4 positioniert.

Ergänzend kann zu einem Eigenlüfter 8 und oder einem externen Fremdlüfter im Mittelkanal 20 ein zusätzlicher Fremdlüfter 31 positioniert sein, der den Luftstrom des Sekundärkreislaufes 3 zusätzlich antreibt zur Aufrechterhaltung oder Beschleunigung des Luftstromes im Sekundärkreislauf 3 beiträgt.

Die einzelnen Module 1 werden vorzugsweise von dem Sekundärluftstrom 3 parallel durchströmt. Jedes Modul 1 stellt dabei eine nahezu ähnliche Kühlleistung bereit, da der Sekundärluftstrom 3 vor Eintritt in das jeweilige Module 1 eine nahezu gleiche Temperatur aufweist. Die Kühlleistung kann über einen externen Fremdlüfter - siehe oben - oder den Zusatzlüfter 23 des Moduls 1 selbst gesteigert werden.

Ebenso ist es möglich den Aufsatzkühler 4 in einem anderen Raum als die dynamoelektrische Maschine 5 aufzustellen. Dabei sind dann der Primärkühlluftstrom 2 über dementsprechende Zuleitungen zu führen.

Es gibt mehrere Möglichkeiten der Führung der erwärmten Abluft des Sekundärkreislaufes 3, die aus dem Abluftkanal 38, also aus den Modulen 1 kommt. Leitelemente können dabei diese Abluft nach schräg unten oder zunächst in achsparalleler Richtung und danach optional schräg nach oben leiten. Ebenso sind achsparallele Ausrichtungen der Leitelemente vorstellbar, die die erwärmte Abluft des Sekundärkreislaufes 3 in die eine und/oder andere Richtung leiten.

Durch dementsprechende Ausrichtung der Leitelemente kann auch die erwärmte Abluft des Sekundärkreislaufes 3 nach oben und/oder nach unten geleitet werden.

Um eine Schalldämmung des Aufsatzkühlers 4 zu schaffen, werden der Innenraum des Gehäuses 15 und/oder die Luftaustrittfläche des Sekundärkreislaufes 3 ausgerichtet und/oder zumindest abschnittsweise mit Schalldämmelementen versehen, ohne die Kühlleistung des Aufsatzkühlers 4 zu beeinträchtigen.

Durch die erfindungsgemäße Ausgestaltung des Aufsatzkühlers 4 sind sämtlich bekannte Bauformen möglich, indem die dynamoelektrischen Maschine 5 vertikal, horizontal oder in einem vorgebbaren Winkel geneigt aufstellbar ist (IM1001...).

Durch die erfindungsgemäße Ausgestaltung des Aufsatzkühlers 4 sind auch weiterhin sämtlich bekannte Kühlarten, wie IC611, IC616, IC666, IC661, etc. umsetzbar.

Der Aufsatzkühler 4 muss nicht zwangsläufig auf der Maschine 5 angeordnet sein. Er kann ebenso seitlich an der Maschine oder sogar unterhalb der Maschine oder in einem separaten Nebenraum angeordnet sein.

Die innerhalb des Gehäuses 26 angeordneten Wellenlüfter 24 des Primärkreislaufes 2 können unabhängig von der Kühlart (Z- oder X-Belüftung) auf der einer Arbeitsmaschine zugewandten Seite und/oder auf der einer Arbeitsmaschine der abgewandten Seite innerhalb des Gehäuses 26 der dynamoelektrischen Maschine 5 angeordnet sein. (Also der DE-Seite (Drive-End) oder NDE-Seite (Non-Drive-End)).

Dies trifft grundsätzlich auch für den Lüfter 8 zu, der - sofern vorgesehen - ebenfalls an der DE-Seite und/oder NDE-Seite der dynamoelektrischen Maschine 5 angeordnet sein kann.

Um den Sekundärkreislauf 3 und/oder den Primärkreislauf 2 aufrecht zu erhalten, kann ergänzend oder allein auch zumindest ein Fremdlüfter 31 vorgesehen werden, der die erforderlich Luftmenge drückt oder durch den Sekundärkreislauf 3 saugt.

Diese Fremdlüfter 31 können - wie oben ausgeführt - an nahezu beliebigen Stellen des Primärkreislauf 2 und/oder Sekundärkreislaufes 3 angeordnet werden.

Dieser erfindungsgemäße Aufsatzkühler 4 eignet sich auch für explosionsgeschützte Anlagen. Die dynamoelektrische Maschine 5 ist dann als geschlossene Maschine ausgeführt. Dabei ist ggf. auf Abdichtung der Spalte, insbesondere zwischen den Modulen 1 erhöhte Aufmerksamkeit zu schenken, um ein Eindringen eines ggf. explosiven Gases in den Primärkreislauf 2 - und damit dem Wicklungssystem der dynamoelektrischen Maschine 5 - zu verhindern. Dies kann auch durch die in den Modulen 1 vorgesehenen Sensoren 39 überwacht werden.

Als Kühlmedien des Primärkreislaufes 2 und/oder Sekundärkreislaufes 3 sind außer Luft auch andere gasförmige Medien, wie z.B. Stickstoff möglich. Ebenso sind für den Primärkreislauf 2 und/oder Sekundärkreislauf 3 auch flüssige Kühlmedien, wie Öl oder Wasser denkbar. Entscheidend ist immer der Wärmeaustausch zwischen Primärkreislauf 2 und Sekundärkreislauf 3 über die intelligenten Module 1 des Aufsatzkühlers 4, die als Plattenkühler ausgeführt sind und deren Möglichkeiten der Analyse der Kühlprozesses bzw. des Zustandes der dynamoelektrischen Maschine 5.

## Patentansprüche

1. Modul (1) eines Aufsatzkühlers (4), insbesondere Plattenwärmetauschers einer dynamoelektrischen Maschine (5), welches Modul (1) voneinander strömungsmäßig getrennte Bereiche aufweist, die die Ausbildung eines Primärkreislaufes (2) und eines Sekundärkreislauf (3) gestatten, welches Modul (1) zumindest einen Abschnitt (40) aufweist, der einen Zusatzlüfter (23) und/oder einen Sensor (39) und/oder Analysemöglichkeiten und/oder Kontaktierungsmöglichkeiten und/oder Kommunikationsmittel zu einer übergeordneten Regelung (42) aufweist, welches Modul (1) mit einer Aufnahmeöffnung (22) des Aufsatzkühlers (4) korrespondierende Verschlussmechanismen (44,45) aufweist, welches Modul (1) im eingesetzten Zustand in eine Aufnahmeöffnung (22) des Aufsatzkühlers (4) der dynamoelektrischen Maschine (5) zumindest einen Teil eines Primärkreislaufes (2) und zumindest einen Teil eines Sekundärkreislaufs (3) des Aufsatzkühlers (4) mit der dynamoelektrischen Maschine (5) ermöglicht.

2. Modul (1) eines Aufsatzkühlers (4) nach Anspruch 1, d a - d u r c h **gekennzeichnet** , dass die Sensoren (39) im Primärkreislaufes (2) und/oder im Sekundärkreislauf (3) und/oder im Abschnitt (40) angeordnet sind.

3. Modul (1) eines Aufsatzkühlers (4) nach Anspruch 1 oder 2, **dadurch gekennzeichnet , dass** die Verschlussmechanismen (44, 45) als verschiebbare Abdeckböden (44) und/oder Klappen (45) ausgeführt sind.

4. Modul (1) nach einem der vorhergehenden Ansprüche, da- d u r c h **gekennzeichnet** , dass die strömungsmäßig getrennten Bereiche des Moduls (1) als Teil des Primärkreislaufes (2) und Teil des Sekundärkreislauf (3) als Platten (16) ausgeführt sind.

5. Modul (1) nach Anspruch 2, **dadurch** g e k e n n - z e i c h n e t , dass diese Platten (16) der Module (1) oberflächenvergrößernde Strukturen, insbesondere wellenförmig ausgeführt sind.

6. Aufsatzkühler (4) einer dynamoelektrischen Maschine (5), die einen Stator (17) mit einem Wicklungssystem und einen um eine Achse (7) drehbar gelagerten Rotor (18) aufweist, welcher Aufsatzkühler (4) mit Modulen (1) nach Anspruch 1 bis 5 zu einem Wärmetauscher, insbesondere Plattenwärmetauscher ausbildbar ist,
- wobei der Aufsatzkühler (4) Mittel aufweist, um mit einer dynamoelektrischen Maschine (5) einen Primärkreislauf (2) und einen davon strömungstechnisch getrennten Sekundärkreislauf (3) auszubilden,
- wobei der Aufsatzkühler (4) Primäröffnungen zu der dynamoelektrischen Maschine (5) aufweist, die zur Ausbildung eines Primärkreislaufes (2) dienen, und Sekundäröffnungen, die zur Ausbildung eines Sekundärkreislaufes (3) dienen,
- wobei der Aufsatzkühler (4) Aufnahmeöffnungen (22) zur Aufnahme der Module (1) aufweist,
- wobei der Aufsatzkühler (4) einen Rahmen/Gehäuse (15) bildet, der für die Module (1) eine elektrische Kontaktiereinrichtung (46) und/oder Datenverbindung der Module (1) untereinander und/oder Verbindungen zu einer übergeordneten Regelung (42) in der Aufnahmeöffnung (22) bereitstellt,
- wobei durch Einsetzen oder Ausnehmen der Module (1) in ihre bzw. aus Ihren jeweiligen Aufnahmeöffnungen (22) Verschlussmechanismen (44, 45) zur Öffnung/Verschließen von Primärkreislauf (2) und Sekundärkreislauf (3) betätigt werden.

7. Aufsatzkühler (4) einer dynamoelektrischen Maschine (5) nach Anspruch 6, **dadurch gekennzeich- net,** dass insbesondere ein zu einer Achse (7) der dynamoelektrischen Maschine (5) paralleler Mittelkanal (20) im Aufsatzkühler (4) vorhanden ist, welcher Mittelkanal (20) einen Luftstrom eines Sekundärkreislaufes (3) für die Module (1) aufnehmen kann, welcher Luftstrom durch Eigen- und/oder Fremdlüfter (8,31) erzeugbar ist, die unmittelbar an der Maschine (5) oder in der Nähe der dynamoelektrischen Maschine (5) angeordnet sind.

8. Aufsatzkühler (4) einer dynamoelektrischen Maschine (5) nach Anspruch 6 oder 7, **dadurch gekenn**- **zeichnet** , dass der Sekundärkreislauf (3) offen ausführbar ist, d.h. mit Umgebungsluft betreibbar ist.

9. Aufsatzkühler (4) einer dynamoelektrischen Maschine (5) nach einem der vorhergehenden Ansprüche, **dadurch gekennzeichnet, dass** das Gehäuse (15) des Aufsatzkühlers (4) Öffnungen für zumindest einen Zu- und zumindest einen Abstromkanal (10,11) des Primärkreislaufes (2) und Öffnungen für Zu- und Abluftkanal (37,38) des Sekundärkreislaufes (3) aufweist.

10. Aufsatzkühler (4) einer dynamoelektrischen Maschine (5) nach einem der vorhergehenden Ansprüche, **dadurch gekennzeichnet, dass** das Gehäuse (15) des Aufsatzkühlers Leitvorrichtungen (12) und/oder Verschlussmechanismen (44,45) des Primärkreislaufes (2) und/oder des Sekundärkreislaufes (3) aufweist.

11. Aufsatzkühler (4) einer dynamoelektrischen Maschine (5) nach einem der vorhergehenden Ansprüche, **dadurch gekennzeichnet, dass** ein Luftfilter vor dem Eintritt von Umgebungsluft in den Sekundärkreislauf (3), insbesondere vor dem Mittenkanal (20) angeordnet ist.

12. Dynamoelektrische Maschine (5) mit einem Aufsatzkühler (4) nach einem der Ansprüche 6 bis 11, **dadurch gekennzeichnet , dass** ein Gehäuse (26) der dynamoelektrischen Maschine (5) Öffnungen (10,11) aufweist, die mit dementsprechenden Primäröffnungen eines Aufsatzkühlers (4) nach Anspruch 6 bis 11 derart korrespondieren, dass sich im Betrieb der dynamoelektrischen Maschine (5) ein Primärkreislauf (2) einstellt, der mittels eines Kühlluftstromes eines Sekundärkreislaufes (3) über Module (1) des Aufsatzkühlers (4) rückkühlbar ist.

13. Dynamoelektrische Maschine (5) mit einem Aufsatzkühler (4) nach Anspruch 12, **dadurch gekennzeich** - **net,** dass der Kühlluftstrom von Primärkreislauf (2) und/oder Sekundärkreislauf (3) durch Fremdlüfter (31) und/oder Eigenlüfter (8,24) der dynamoelektrischen Maschine (5) generierbar ist und/oder durch jeweilige Zusatzlüfter (23) der Module (1) nach Anspruch 1 bis 5, insbesondere optional unterstützt wird.

14. Dynamoelektrische Maschine (5) mit einem Aufsatzkühler (4) nach einem der Ansprüche 12 oder 13, **dadurch gekennzeichnet , dass** in der dynamoelektrischen Maschine (5) und/oder dem Aufsatzkühler (4) und/oder Modul (1) Sensoren (39) vorhanden sind, die die Kühltemperatur in einem Primärkreislauf (2) und/oder in einem Sekundärkreislauf (3) und/oder Schwingungen und/oder Drehzahl der dynamoelektrischen Maschine (5) erfassen, diese Daten einer Regelvorrichtung übermittelbar sind, um die Drehzahl von Fremdlüftern (31) zu steuern und/oder Leitvorrichtungen (12) der Kreisläufe (2,3) des Aufsatzkühlers (4) und/oder der dynamoelektrischen Maschine (5) zu stellen.

15. Industrielle Arbeitsmaschinen, wie Verdichter, Lüfter, Pumpen oder Kompressoren mit einer dynamoelektrischen Maschine (5) nach Anspruch 12 bis 14, wobei die Kühlleistung je nach Verwendung und Aufstellungsort der dynamoelektrischen Maschine (5) über einstellbare Volumenströme von Primärkreislauf (2) und/oder Sekundärkreislauf (3) und/oder über die Anzahl der Module (1) gemäß Anspruch 1 bis 5 und/oder Art der Module (1) anpassbar ist.
